# EUROPEAN PATENT SPECIFICATION

(11) **EP 1 381 210 B1**
(45) Date of publication and mention of the grant of the patent: **03.05.2006**
(21) Application number: 03014585.8
(22) Date of filing: 08.07.2003
(51) Int. Cl.: H04M 3/42, H04M 3/38

(54) **Caller identification based on voice recognition**
Anruferidentifizierung basiert auf Spracherkennung
Identification d'un appelant basé sur la reconnaisance vocale

(30) Priority: 10.07.2002 US 192068
(43) Date of publication of application: 14.01.2004
(73) Proprietor: ALCATEL, 75008 Paris (FR)
(72) Inventor: Mani, Babu V., Collin County, Texas 75025 (US)
(74) Representative: Rausch, Gabriele

(56) References cited:
- EP-A- 0 585 004
- EP-A- 1 009 148
- EP-A- 1 156 649
- US-A- 5 689 616
- RABINER L R: "TOWARD VISION 2001: VOICE AND AUDIO PROCESSING CONSIDERATIONS" AT & T TECHNICAL JOURNAL, AMERICAN TELEPHONE AND TELEGRAPH CO. NEW YORK, US, vol. 74, no. 2, 1 March 1995 (1995-03-01), pages 4-13, XP000495041 ISSN: 8756-2324

## Description

The present invention relates generally to communication systems and, more particularly, to a method and system for identifying a caller based on voice recognition. Display of a caller identification is provided to a receiving-side party. And, call discrimination and specialized call treatment such as separate billing, toll restriction, and personalized routing, for each call originating from the same station, or other communication device.

### BACKGROUND OF THE INVENTION

Communication through the use of telephonic communication systems is an important aspect of modern society. Telephonic networks of various telephonic communication systems have been installed throughout significant portions of the populated areas of the world. Telephonic stations are connected to the telephonic network, such as by a wireline connection or a radio interface. A communication session is formed between two or more of the telephonic stations connected to the telephonic network. The telephonic station at which a call is originated may be referred to as the calling party, and the telephonic station at which the call is to be completed, or terminated, may be referred to as the called party.

With currently existing communication systems, an optional feature often available to customers allows the customers to receive a "caller ID" to identify a caller when the telephone is ringing, before the customer answers the telephone. In this way, the customer can decide whether or not to answer the call. However, the "caller ID" provided is actually more appropriately labeled a "station ID" because the identifier provided generally allows only one identification for a particular telephone line. Thus, problems with this feature result from the fact that a typical residence may have many people sharing a single telephone line.

Currently existing communication systems also sometimes utilize voice recognitions in which voice commands are given. Communication systems that utilize voice recognition include systems that provide voice-activated dialing. For instance, systems existing in which voice commands, such as "Call Mom" initiate dialing of dialing numbers associated with the "Call Mom" command.

Voice recognition capabilities are not yet generally fully integrated into communication systems. The advantages and features that voice recognition is capable of providing are therefore not yet maximized. For instance, synergistic combinations of voice recognition and caller id features have generally not been considered.

Document EP 1009148 discloses a method and a system for indicating authentication of the identity of a calling party based on an intrinsic property of the calling party such as voice. Speedier authentication may be provided by using calling line identification information in conjunction with representation matches. When authentication occurs, a signal is produced to indicate same and such signal may be used in uniquely identifying the calling party or in routing the call.

Document EP 0585004 diclsoses the use of subscriber identifiers in a voice directed telecommunications system employing automatic speaker recognition such that a group of subscribers may share the same identifier by storing speech models of group members' speech signals characterizing the identifier.

Accordingly, a manner by which better to take advantage of voice recognition capabilities to provide new and improved communication services would be advantageous.

### SUMMARY OF THE INVENTION

In accordance with the present invention, a method according to claim 1 and a system according to claim 7 for identifying a caller based on voice recognition are provided that substantially eliminate or reduce disadvantages and problems associated with conventional systems and methods.

Technical advantages of one or more embodiments of the present invention include providing an improved method for identifying a caller. In a particular embodiment, voice identification is used to distinguish between parties sharing a single telephone line. As a result, true caller identification may be provided, as opposed to simply station identification. In addition, personalized billing and individual profiles may be implemented.

Other technical advantages will be readily apparent to one skilled in the art from the following figures, description, and claims.

### BRIEF DESCRIPTION OF THE DRAWINGS

For a more complete understanding of the present invention and its advantages, reference is now made to the following description taken in conjunction with the accompanying drawings, wherein like reference numerals represent like parts, in which:
FIGURE 1 is a block diagram illustrating a communication system operable to identify a user based on voice recognition in accordance with one embodiment of the present invention;
FIGURE 2 is a block diagram illustrating details of the voice recognition system of FIGURE 1 in accordance with one embodiment of the present invention;
FIGURES 3A-C are tables illustrating data that may be stored in the voice pattern database of FIGURE 2 in accordance with one embodiment of the present invention;
FIGURES 4A-B are tables illustrating data that may be stored in the user database of FIGURE 2 in accordance with one embodiment of the present invention; and
FIGURE 5 is a flow diagram illustrating a method for identifying a user based on voice recognition in the communication system of FIGURE 1 in accordance with one embodiment of the present invention.

### DETAILED DESCRIPTION

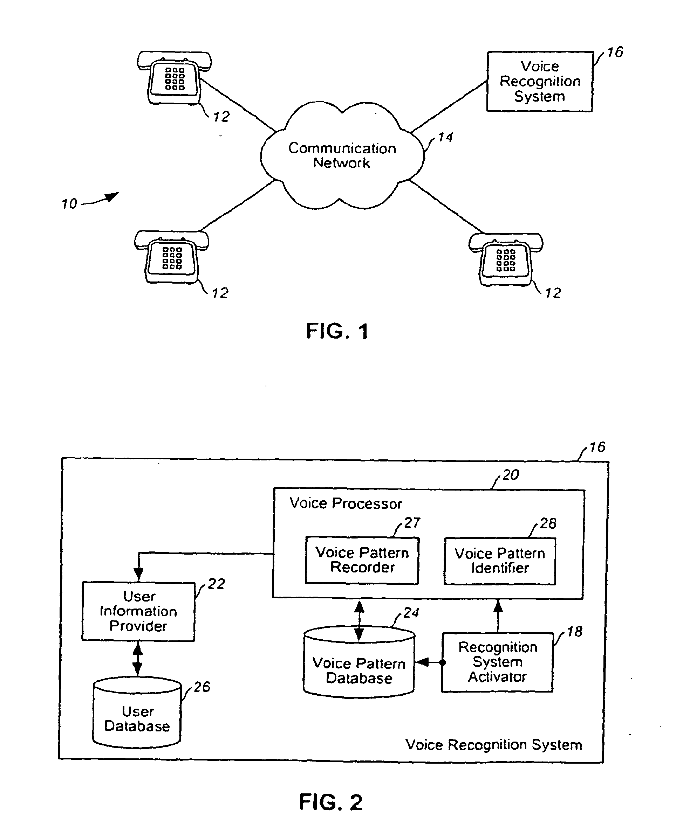

FIGURE 1 is a block diagram illustrating a communication system 10 operable to identify a user based on voice recognition in accordance with one embodiment of the present invention. The communication system 10 comprises a plurality of communication devices 12, a communication network 14 that is operable to couple the communication devices 12 to each other, and a voice recognition system 16. The communication system 10 may comprise a telephonic or other suitable communication system that is operable to provide communication between two or more of the communication devices 12.

The communication devices 12 may comprise landline telephones, wireless telephones, Session Initiation Protocol (SIP) terminals, H.323 devices, Integrated Services Digital Network (ISDN) terminals, and/or any other suitable communication devices. The communication network 14 is operable to establish communication sessions between communication devices 12. The communication network 14 is also operable to provide call data, such as station identifiers for the communication devices 12, voice data, and the like to the voice recognition system 16 for processing and to receive information from the voice recognition system 16 for use in managing the call. For example, a user making a call from a shared telephone may receive individualized billing based on his or her voice being used during the call. In addition, users may be provided with specified access or blocked from specified access to making calls. Thus, for example, a user may be allowed only to call specified telephone numbers based on his or her voice, or a user may be blocked from placing certain calls, such as long distance calls, based on his or her voice. It will be understood that the communication network 14 may otherwise manage the calls based on the user's voice without departing from the scope of the present invention.

The voice recognition system 16 may be coupled to the communication network 14 locally, may be integral to the communication network 14, or may be remote from the communication network 14 and coupled to the communication network 14 through communication lines and/or other suitable networks. As described in more detail below, the voice recognition system 16 is operable to store voice patterns for a plurality of users of the communication devices 12 and to identify those users based on their voices.

The voice recognition system 16 may comprise logic encoded in media. The logic comprises functional instructions for carrying out program tasks. The media comprises computer disks or other computer-readable media, application-specific integrated circuits (ASICs), field-programmable gate arrays (FPGAs), digital signal processors (DSPs), other suitable specific or general purpose processors, transmission media or other suitable media in which logic may be encoded and utilized.

FIGURE 2 is a block diagram illustrating details of the voice recognition system 16 in accordance with one embodiment of the present invention. The voice recognition system 16 comprises a recognition system activator 18, a voice processor 20, a user information provider 22, a voice pattern database 24, and a user database 26.

The recognition system activator 18 is operable to receive data from the communication devices 12 through the communication network 14, to decide whether or not to activate the voice processor 20 based on a search of data stored in the voice pattern database 24, and to activate the voice processor 20.

The voice processor 20 is coupled to the recognition system activator 18. The voice processor 20 comprises a voice pattern recorder 27 and a voice pattern identifier 28. The voice pattern recorder 27 is operable to record samples of users' voice patterns in the voice pattern database 24. The voice pattern identifier 28 is operable to be activated by the recognition system activator 18 and to identify matching voice patterns stored in the voice pattern database 24 based on voice data received from the communication device 12 through the communication network 14.

The user information provider 22 is coupled to the voice processor 20. The user information provider 22 is operable to store user information relating to users of the communication devices 12 in the user database 26, to search the user database 26 for the previously stored user information when a user is identified by the voice pattern identifier 28 of the voice processor 20, and to provide the user information to the communication network 14. The user information may comprise, for example, command identifiers for automatically calling pre-determined telephone numbers, profiles indicating allowed telephone access or blocked telephone access, and any other suitable user information.

The voice pattern database 24 and the user database 26 may each comprise any suitable data store operable to store voice pattern data and user information, respectively. It will be understood that the voice pattern database 24 and/or the user database 26 may be remote from the voice recognition system 16 and coupled to the voice recognition system 16 through any suitable communication lines and/or networks. It will also be understood that the voice pattern database 24 and the user database 26 may comprise a single data database.

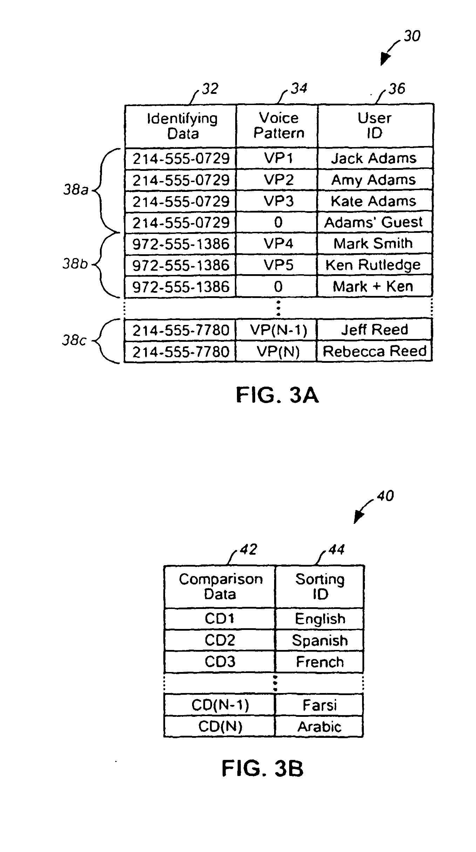

FIGURES 3A-C are tables illustrating data that may be stored in the voice pattern database 24 in accordance with one embodiment of the present invention. Although the data is illustrated as being stored in tables, it will be understood that the data may be otherwise suitably stored in the voice pattern database 24 without departing from the scope of the present invention.

FIGURE 3A is a station identifying table 30 that is operable to store information regarding a plurality of stations, such as communication devices 12. According to one embodiment, the data stored in the identifying table 30 comprises identifying data 32, a voice pattern 34, and a user identifier 36. It will be understood that the data may comprise any other suitable information without departing from the scope of the present invention.

In the illustrated embodiment, the station identifying table 30 comprises a station section 38 for each communication device 12. As used herein, "each" means every one of at least a subset of the identified items. Each station section 38 comprises the same identifying data 32 operable to identify the communication device 12. For example, the identifying data 32 may comprise a telephone number corresponding to the communication device 12. It will be understood that the identifying data 32 may be stored in any suitable format. For example, the identifying data 32 may comprise numerical values or any other suitable identifiers.

Each station section 38 also comprises a voice pattern 34 for each user associated with the communication device 12. The voice pattern 34 is operable to identify the voice of the user. The voice pattern 34 may be stored in any suitable format. For example, the voice pattern 34 may comprise alphanumerical values operable to identify voice patterns stored elsewhere, actual voice patterns, or any other suitable data operable to identify a designated user of the communication device 12 by his or her voice. Each station section 38 may also comprise one or more entries without specified voice patterns 34. These "voice patterns" 34 may be used to specifically identify a user of the communication device 12 that has not been designated as a user, such as a guest, or for any other suitable purpose.

Each station section 38 also comprises a user identifier 36 for each voice pattern 34 that is operable to identify the user corresponding to the voice pattern 34. The user identifier 36 may be stored in any suitable format. For example, the user identifier 36 may comprise actual user names in textual format or any other suitable format.

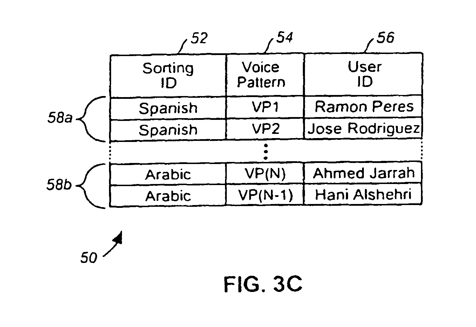

FIGURE 3B is a comparison table 40 and FIGURE 3C is a sorting table 50. These tables 40 and 50 are operable to be used together in order to sort certain voice patterns based on any suitable criteria for more efficient searching. According to one embodiment, the data stored in the comparison table 40 comprises comparison data 42 and a sorting identifier 44. It will be understood that the data may comprise any other suitable information without departing from the scope of the present invention.

The comparison data 42 may comprise voice patterns or other suitable data operable to identify a plurality of users of communication devices 12 based on a common characteristic, such as language or accent. The comparison data 42 may be stored in any suitable format. For example, the voice pattern 34 may comprise alphanumerical values operable to identify voice patterns stored elsewhere, actual voice patterns, or any other suitable data operable to identify a user of the communication device 12 by a particular characteristic of his or her voice.

The sorting identifier 44 is operable to identify the common characteristic as determined by the comparison data 42. For example, the sorting identifier 44 may comprise a language, an accent, a combination of language and accents, or any other suitable characteristic that may be shared by a plurality of users of the communication devices 12. It will be understood that the sorting identifier 44 may be stored in any suitable format. For example, the sorting identifier 44 may comprise textual strings or any other suitable identifier.

According to one embodiment, the data stored in the sorting table 50 comprises a sorting identifier 52 that corresponds to the sorting identifier 44, a voice pattern 54, and a user identifier 56. It will be understood that the data may comprise any other suitable information without departing from the scope of the present invention.

In the illustrated embodiment, the sorting table 50 comprises a sorted section 58 for each common characteristic identified by a sorting identified 52. Each sorted section 58 comprises the same sorting identifier 52 operable to identify the common characteristic. For example, the sorting identifier 52 may comprise a language, an accent or the like. It will be understood that the sorting identifier 52 may be stored in any suitable format. For simplicity, the sorting identifier 52 may comprise a same format as the sorting identifier 44 of the comparison table 40.

Each sorted section 58 also comprises a voice pattern 54 for each of a plurality of users. The voice pattern 54 is operable to identify the voice of the user. The voice pattern 54 may be stored in any suitable format. For example, the voice pattern 54 may comprise alphanumerical values operable to identify voice patterns stored elsewhere, actual voice patterns, or any other suitable data operable to identify a specified user of a communication device 12 by his or her voice.

Each sorted section 58 also comprises a user identifier 56 for each voice pattern 54 that is operable to identify the user corresponding to the voice pattern 54. The user identifier 56 may be stored in any suitable format. For example, the user identifier 56 may comprise actual user names in textual format or any other suitable format.

Thus, using the comparison table 40 and the sorting table 50, a plurality of users may be identified based on their voice patterns 54 regardless of which communication device 12 is used by the user. In this way, certain types of calls, such as calls from pay phones, airport phones, or any other types of calls, may be screened for the users identified by the user identifiers 56, allowing law enforcement, for example, to track down fugitives when they use communication devices 12. The voice patterns 54 may be stored when a prisoner is incarcerated, when non-citizens enter the country, or at any other suitable location or based on any other suitable event.

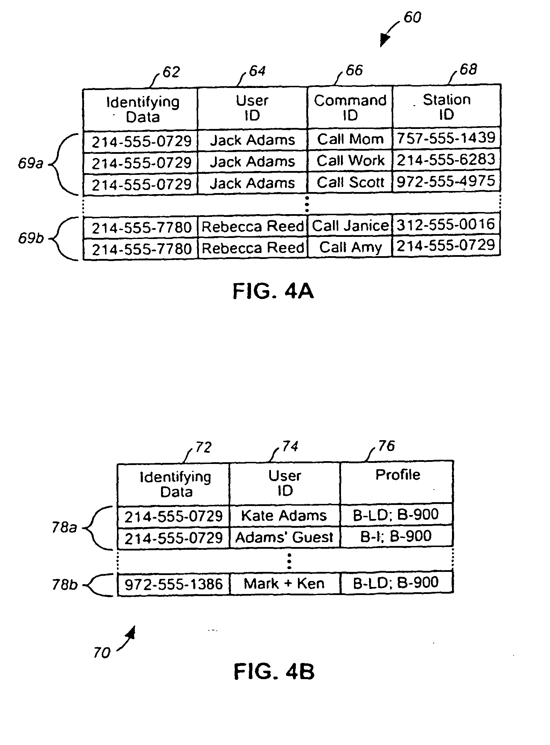

FIGURES 4A-B are tables illustrating data that may be stored in the user database 26 in accordance with one embodiment of the present invention. FIGURE 4A is a command identifying table 60 that is operable to store command information regarding a plurality of users of communication devices 12. According to one embodiment, the data stored in the command identifying table 60 comprises identifying data 62, a user identifier 64, a command identifier 66, and a station identifier 68. It will be understood that the data may comprise any other suitable information without departing from the scope of the present invention.

In the illustrated embodiment, the station identifying table 30 comprises a station section 69 for each communication device 12. Each station section 69 comprises the same identifying data 62 operable to identify the communication device 12. For example, the identifying data 62 may comprise a telephone number corresponding to the communication device 12. It will be understood that the identifying data 62 may be stored in any suitable format. For example, the identifying data 62 may comprise numerical values or any other suitable identifiers.

Each station section 69 also comprises a user identifier 64 that is operable to identify a user for which one or more commands is stored in the command identifying table 60. The user identifier 64 may be stored in any suitable format. For example, the user identifier 64 may comprise actual user names in textual format or any other suitable format.

Each station section 69 also comprises a command identifier 66 for each user identified by a user identifier 64. The command identifier 66 is operable to identify a command for the user. For example, the commands identified by the command identifier 66 may comprise commands to place calls to specified telephone numbers, such as "Call Scott" which would result in a call being placed to the telephone number specified as Scott's telephone number. The command identifier 66 may be stored in any suitable format. For example, the command identifier 66 may comprise alphanumerical values operable to identify voice patterns stored elsewhere, actual voice patterns, or any other suitable data operable to identify a command for the user of the communication device 12 based on his or her voice stating the appropriate command.

Each station section 69 also comprises a station identifier 68 that is operable to identify a communication device 12 associated with the command identified by the command identifier 66. The station identifier 68 may comprise a telephone number corresponding to the communication device 12. It will be understood that the station identifier 68 may be stored in any suitable format. For example, the station identifier 68 may comprise numerical values or any other suitable identifiers.

Thus, in the illustrated embodiment, a user identified based on a voice pattern as having the user identifier 64 of "Rebecca Reed" using a communication device 12 identified by the identifying data 62 of 214-555-7780 may speak into the communication device 12 the command identifier 66 of "Call Janice," and the communication network 14 would respond by placing a call to the communication device 12 with the station identifier 68 of 312-555-0016.

FIGURE 4B is a profile table 70 that is operable to store profile information regarding a plurality of users of communication devices 12. According to one embodiment, the data stored in the profile table 70 comprises identifying data 72, a user identifier 74, and a profile 76. It will be understood that the data may comprise any other suitable information without departing from the scope of the present invention.

In the illustrated embodiment, the profile table 70 comprises a station section 78 for each communication device 12. Each station section 78 comprises the same identifying data 72 operable to identify the communication device 12. For example, the identifying data 72 may comprise a telephone number corresponding to the communication device 12. It will be understood that the identifying data 72 may be stored in any suitable format. For example, the identifying data 72 may comprise numerical values or any other suitable identifiers.

Each station section 78 also comprises a user identifier 74 that is operable to identify a user for which a profile 76 is stored in the profile table 70. The user identifier 74 may be stored in any suitable format. For example, the user identifier 74 may comprise actual user names in textual format or any other suitable format.

Each station section 78 also comprises a profile 76 for each user identified by a user identifier 74. The profile 76 is operable to identify a profile for the user. For example, the profiles identified by the profile 76 may comprise specific access rights to using the communication device 12 identified by the identifying data 72, specific blocks prohibiting rights to using the communication device 12 identified by the identifying data 72 and/or any other suitable profile information. The profile 76 may be stored in any suitable format. For example, the profile 76 may comprise alphanumerical values operable to identify access rights, blocks prohibiting rights, or any other suitable data operable to identify a profile for the user of the communication device 12 based on his or her voice when using the communication device 12.

Thus, in the illustrated embodiment, a user identified based on a voice pattern as having the user identifier 74 of "Kate Adams" using a communication device 12 identified by the identifying data 72 of 214-555-0729 may be blocked from making long distance calls or calls to 900 numbers, while a user identified based on no matching voice pattern as having the user identifier 74 of "Adams' Guest" using a communication device 12 identified by the identifying data 72 of 214-555-0729 may be blocked from making international calls or calls to 900 numbers.

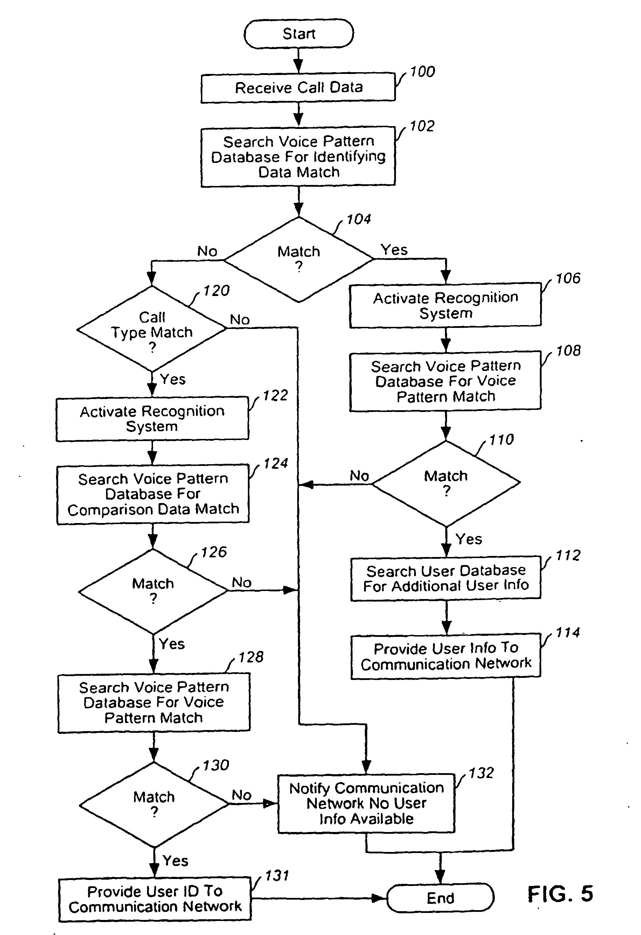

FIGURE 5 is a flow diagram illustrating a method for identifying a user based on voice recognition in the communication system 10 in accordance with one embodiment of the present invention. The method begins at step 100 where the recognition system activator 18 receives call data associated with an incoming call from a user of a communication device 12 from the communication network 14. At step 102, the recognition system activator 18 searches the voice pattern database 24 for an identifying data 32 match based on the call data.

At decisional step 104, the recognition system activator 18 makes a determination regarding whether or not a match was found in the voice pattern database 24. If a match is found, the method follows the Yes branch from decisional step 104 to step 106. At step 106, the recognition system activator 18 activates the voice recognition system 16 by activating the voice pattern identifier 28 of the voice processor 20. At step 108, the voice pattern identifier 28 searches the voice pattern database 24 for a voice pattern 34 match based on the voice data in the call data.

At decisional step 110, the voice pattern identifier 28 makes a determination regarding whether or not a match was found in the voice pattern database 24. If a match is found, the method follows the Yes branch from decisional step 110 to step 112. At step 112, the user information provider 22 searches the user database 26 for additional user information based on the identifying data 32 and the user identifier 36 corresponding to the matched voice pattern 34. At step 114, the user information provider 22 provides user information, including a user identifier 36 and/or any user information from the user database 26, to the communication network 14 for use in managing the call, at which point the method comes to an end.

Returning to decisional step 104, if no match is found, the method follows the No branch from decisional step 104 to decisional step 120. At decisional step 120, the recognition system activator 18 makes a determination based on the call data regarding whether or not the type of call matches one of the specified types of calls that trigger a comparison data search. For example, the specified types of calls may comprise pay phone calls, airport telephone calls, and the like. If a call type match is found, the method follows the Yes branch from decisional step 120 to step 122. At step 122, the recognition system activator 18 activates the voice recognition system 16 by activating the voice pattern identifier 28 of the voice processor 20. At step 124, the recognition system activator 18 searches the voice pattern database 24 for a comparison data 42 match based on the voice data in the call data.

At decisional step 126, the voice pattern identifier 28 makes a determination regarding whether or not a match was found in the voice pattern database 24. If a match is found, the method follows the Yes branch from decisional step 126 to step 128. At step 128, the voice pattern identifier 28 searches the voice pattern database 24 for a voice pattern 54 match based on the voice data in the call data and the sorting identifier 44 corresponding to the matched comparison data 42.

At decisional step 130, the voice pattern identifier 28 makes a determination regarding whether or not a match was found in the voice pattern database 24. If a match is found, the method follows the Yes branch from decisional step 130 to step 131. At step 131, the user information provider 22 provides the user identifier 56 corresponding to the matched voice pattern 54 to the communication network 14 for use in managing the call, at which point the method comes to an end.

Returning to decisional step 110, if no match is found, the method follows the No branch from decisional step 110 to step 132. Also, returning to decisional step 120, if no match is found, the method follows the No branch from decisional step 120 to step 132. Also, returning to decisional step 126, if no match is found, the method follows the No branch from decisional step 126 to step 132. Also, returning to decisional step 130, if no match is found, the method follows the No branch from decisional step 130 to step 132. At step 132, the user information provider 22 notifies the communication network 14 that no user information is available for use in managing the call, at which point the method comes to an end.

Although the present invention has been described with several embodiments, various changes and modifications may be suggested to one skilled in the art. It is intended that the present invention encompass such changes and modifications as fall within the scope of the appended claims.

## Claims

1. A method for identifying a caller based on voice recognition, comprising:
receiving call data from a communication device (12) through a communication network (14), the call data comprising voice data for a user of the communication device (12) and a station identifier for the communication device (12);
searching for an identifying data (32) match based on the station identifier for the communication device (12);
activating a voice recognition system (16) when an identifying data (32) match is found;
searching for a first voice pattern (34) match with the voice recognition system (16) based on the voice data; and
providing a user identifier (36) corresponding to the first voice pattern (34) to the communication network (14) when the first voice pattern (34) match is found, the user identifier (36) operable to identify the user of the communication device (12); and **characterised in that**
if an identifying data (32) match is not found
searching whether a call type match exists based on the call data for detecting certain types of calls, such as calls from pay phones, airport phones, or any other types of calls;
activating the voice recognition system (16) when a call type match is found;
searching for a comparison data (42) match with the voice recognition system (16) based on a common characteristic of the voice data, such as language or accent;
searching for a second voice pattern (54) match with the voice recognition system (16) based on the call data when the comparison data (42) match is found; and
providing a user identifier (56) corresponding to the second voice pattern (54) match to the communication network (14) when the second voice pattern (54) match is found, the user identifier (56) operable to identify the user of the communication device (12).

2. The method of Claim 1, further comprising searching for user information based on the user identifier (36) when the voice pattern (34) match is found.

3. The method of Claim 2, further comprising providing the user information to the communication network (14), thereby to provide specialized treatment responsive thereto.

4. The method of Claim 3, the user information comprising commands for the user of the communication device (12) .

5. The method of Claim 3, the user information comprising a profile for the user of the communication device (12).

6. The method of Claim 1, further comprising notifying the communication network (14) that a user identifier (36) is unavailable when the first voice pattern (34) match is not found.

7. A system for identifying a caller based on voice recognition, comprising:
a computer-processable medium;
logic stored on the computer-processable medium, the logic operable to receive call data from a communication device (12) through a communication network (14), the call data comprising voice data for a user of the communication device (12) and a station identifier for the communication device (12); to search for an identifying data (32) match based on the station identifier for the communication device (12); to activate a voice recognition system (16) when an identifying data (32) match is found; to search for a first voice pattern (34) match with the voice recognition system (16) based on the call data; and to provide a user identifier (36) corresponding to the first voice pattern (34) to the communication network (14) when the first voice pattern (34) match is found, the user identifier (36) operable to identify the user of the communication device (12); and **characterised in that** if an identifying data (32) match is not found, the logic further operable to search for a call type match based on the call data for detecting certain types of calls, such as calls from pay phones, airport phones, or any other types of calls; to activate the voice recognition system (16) when a call type match is found; to search for a comparison data (42) match with the voice recognition system (16) based on a common characteristic of the voice data, such as language or accent; to search for a second voice pattern (54) match with the voice recognition system (16) based on the call data when the comparison data (42) match is found; and to provide a user identifier (56) corresponding to the second voice pattern (54) match to the communication network (14) when the second voice pattern (54) match is found, the user identifier (56) operable to identify the user of the communication device (12).

8. The system of Claim 7, the logic further operable to search for user information based on the user identifier (36) when the voice pattern (34) match is found.

9. The system of Claim 8, the logic further operable to provide the user information to the communication network (14).

10. The system of Claim 9, the user information comprising commands for the user of the communication device (12).

11. The system of Claim 9, the user information comprising a profile for the user of the communication device (12).

12. The system of Claim 7, the logic further operable to notify the communication network (14) that a user identifier (36) is unavailable when the first voice pattern (34) match is not found.

## Patentansprüche

1. Ein Verfahren zur Identifikation eines Anrufers auf der Basis von Spracherkennung, bestehend aus:
Empfang der Anrufdaten von einem Kommunikations-Endgerät (12) über ein Kominunikationsnetz (14), wobei die Anrufdaten Sprachdaten für einen Nutzer des Kommunikations-Endgeräts (12) und eine Anschlusskennung für das Kommunikations-Endgerät (12) umfassen;
Suche nach einer Übereinstimmung der Kennungsdaten (32) auf der Basis der Anschlusskennung für das Kommunikations-Endgerät (12);
Aktivierung eines Spracherkennungssystems (16), wenn eine Übereinstimmung der Kennungsdaten (32) gefunden wurde;
Suche nach einer ersten Übereinstimmung des Sprachmusters (34) mit dem Spracherkennungssystem (16) auf der Basis der Sprachdaten; und
Übermittlung einer Nutzerkennung (36) entsprechend dem ersten Sprachmuster (34) an das Kommunikationsnetz (14), wenn eine erste Übereinstimmung der Sprachmuster (34) gefunden wurde, wobei die Nutzerkennung (36) in der Lage ist, den Nutzer des Kommunikations-Endgeräts (12) zu identifizieren; und **dadurch gekennzeichnet, dass** im dem Fall, in dem keine Übereinstimmung der Kennungsdaten (32) gefunden wurde, zudem erfolgt:
Feststellung, ob eine Übereinstimmung des Anruftyps auf der Basis der Anrufdaten existiert, um bestimmte Anruftypen, wie beispielsweise Anrufe von Telefonzellen, Kartentelefonen oder sonstige Anruftypen zu ermitteln;
Aktivierung des Spracherkennungssystems (16), wenn ein übereinstimmender Anruftyp gefunden wurde;
Suche nach einer Übereinstimmung der Vergleichsdaten (42) mit dem Spracherkennungssystem (16) auf der Basis eines gemeinsamen Merkmals der Sprachdaten, wie z.B. Sprache oder Akzent;
Suche nach einer zweiten Übereinstimmung der Sprachmuster (54) mit dem Spracherkennungssystem (16) auf der Basis der Anrufdaten, wenn eine Übereinstimmung von Vergleichsdaten (42) gefunden wurde; und
Übermittlung einer Nutzerkennung (56) entsprechend der zweiten Übereinstimmung von Sprachmustern (54) an das Kommunikationsnetz (14), wenn die zweite Übereinstimmung von Sprachmustern (54) gefunden wurde, wobei die Nutzerkennung (56) in der Lage ist, den Nutzer des Kommunikations-Endgeräts (12) zu identifizieren.

2. Das Verfahren aus Anspruch 1, das außerdem die Suche nach Nutzerinformationen auf der Basis der Nutzerkennung (36) umfasst, wenn eine Übereinstimmung von Sprachmustern (34) gefunden wurde.

3. Das Verfahren aus Anspruch 2, das außerdem die Übermittlung der Nutzerinformationen an das Kommunikationsnetz (14) umfasst, wodurch deren spezielle Verarbeitung gewährleistet wird.

4. Das Verfahren aus Anspruch 3, wobei die Nutzerinformationen Befehle für den Nutzer des Kommunikations-Endgeräts (12) umfassen.

5. Das Verfahren aus Anspruch 3, wobei die Nutzerinformationen ein Profil für den Nutzer des Kommunikations-Endgeräts (12) umfassen.

6. Das Verfahren aus Anspruch 1, das außerdem eine Mitteilung an das Kommunikationsnetz (14) umfasst, dass keine Nutzerkennung (36) verfügbar ist, wenn keine erste Übereinstimmung von Sprachmustern (34) gefunden wurde.

7. Ein System zur Identifikation eines Anrufers auf der Basis von Spracherkennung, bestehend aus:
einem rechner-verarbeitbaren Medium;
einer auf dem rechner-verarbeitbaren Medium gespeicherten Logik, wobei die Logik in der Lage ist, über ein Kommunikationsnetz (14) Anrufdaten von einem Kommunikations-Endgerät (12) zu empfangen, wobei die Daten Sprachdaten für einen Nutzer des Kommunikations-Endgeräts (12) und eine Anschlusskennung für das Kommunikations-Endgerät (12) beinhalten, und zwar zur Suche nach einer Übereinstimmung der Kennungsdaten (32) auf der Basis der Anschlusskennung für das Kommunikations-Endgerät (12); zur Aktivierung eines Spracherkennungssystems (16), wenn eine Übereinstimmung von Kennungsdaten (32) gefunden wurde; zur Suche nach einer ersten Übereinstimmung von Sprachmustern (34) mit dem Spracherkennungssystem (16) auf der Basis der Anrufdaten; und zur Übermittlung einer Nutzerkennung (36) entsprechend dem ersten Sprachmuster (34) an das Kommunikationsnetz (14), wenn die erste Übereinstimmung von Sprachmustern (34) gefunden wurde, wobei die Nutzerkennung (36) in der Lage ist, den Nutzer des Kommunikations-Endgeräts (12) zu identifizieren, und **dadurch gekennzeichnet, dass** in dem Fall, in dem keine Übereinstimmung von Kennungsdaten (32) gefunden wurde, die Logik außerdem in der Lage ist, nach einer Übereinstimmung von Anruftypen auf der Basis der Anrufdaten zu suchen, um bestimmte Anruftypen zu ermitteln, beispielsweise Anrufe aus Telefonzellen oder Kartentelefonen oder sonstige Typen von Anrufen; zur Aktivierung des Spracherkennungssystems (16), wenn eine Übereinstimmung des Anruftyps gefunden wurde; zur Suche nach einer Übereinstimmung von Vergleichsdaten (42) mit dem Spracherkennungssystem (16) auf der Basis eines gemeinsamen Merkmals der Sprachdaten, wie beispielsweise Sprache oder Akzent; zur Suche nach einer zweiten Übereinstimmung von Sprachmustern (54) mit dem Spracherkennungssystem (16) auf der Basis der Anrufdaten, wenn eine Übereinstimmung von Vergleichsdaten (42) gefunden wurde; und zur Übermittlung einer Nutzerkennung (56) entsprechend der zweiten Übereinstimmung von Sprachmustern (54) an das Kommunikationsnetz (14), wenn die zweite Übereinstimmung von Sprachmustern (54) gefunden wurde, wobei die Nutzerkennung (56) in der Lage ist, den Nutzer des Kommunikations-Endgeräts (12) zu identifizieren.

8. Das System aus Anspruch 7, wobei die Logik außerdem in der Lage ist, auf der Basis der Nutzerkennung (36) nach Nutzerinformationen zu suchen, wenn eine Übereinstimmung von Sprachmustern (34) gefunden wurde.

9. Das System aus Anspruch 8, wobei die Logik außerdem in der Lage ist, die Nutzerinformationen an das Kommunikationsnetz (14) zu übermitteln.

10. Das System aus Anspruch 9, wobei die Nutzerinformationen Befehle für den Nutzer des Kommunikations-Endgeräts (12) umfassen.

11. Das System aus Anspruch 9, wobei die Nutzerinformationen ein Profil für den Nutzer des Kommunikations-Endgeräts (12) umfassen.

12. Das System aus Anspruch 7, wobei die Logik außerdem in der Lage ist, dem Kommunikationsnetz (14) mitzuteilen, dass keine Nutzerkennung (36) zur Verfügung steht, wenn keine erste Übereinstimmung von Sprachmustern (34) gefunden wurde.

## Revendications

1. Procédé pour identifier un appelant en se basant sur la reconnaissance vocale comprenant :
La réception de données d'appel d'un dispositif de communication (12) par le biais d'un réseau de communication (14), les données d'appel comprenant des données vocales pour un utilisateur du dispositif de communication (12) et un identifiant de poste pour le dispositif de communication (12) ;
La recherche d'une concordance avec les données d'identification (32) en se basant sur l'identifiant de poste pour le dispositif de communication (12) ; L'activation d'un système de reconnaissance vocale (16) lorsqu'une concordance avec les données d'identification (32) est trouvée ;
La recherche d'une concordance avec un premier modèle vocal (34) avec le système de reconnaissance vocale (16) en se basant sur les données vocales ; et
La fourniture d'un identifiant d'utilisateur (36) correspondant au premier modèle vocal (34) au réseau de communication (14) lorsque la concordance avec le premier modèle vocal (34) est trouvée, l'identifiant d'utilisateur (36) pouvant être utilisé pour identifier l'utilisateur du dispositif de communication (12) ; et **caractérisé en ce que**
Si une concordance avec les données d'identification (32) n'est pas trouvée, Rechercher s'il existe une concordance du type d'appel en se basant sur les données de l'appel pour détecter certains types d'appels tels que les appels depuis une cabine publique, un téléphone d'aéroport ou tout autre type d'appel ;
Activation du système de reconnaissance vocale (16) lorsqu'une concordance du type d'appel est trouvée ;
Recherche d'une concordance avec les données de comparaison (42) avec le système de reconnaissance vocale (16) en se basant sur une caractéristique commune des données vocales telle que la langue ou l'accent ;
Recherche d'une concordance avec un deuxième modèle vocal (54) avec le système de reconnaissance vocale (16) en se basant sur les données de l'appel lorsque la concordance avec les données de comparaison (42) est trouvée ; et
Fourniture d'un identifiant d'utilisateur (56) correspondant au deuxième modèle vocal (54) concordant au réseau de communication (14) lorsque la concordance avec le deuxième modèle vocal (54) est trouvée, l'identifiant d'utilisateur (56) pouvant être utilisé pour identifier l'utilisateur du dispositif de communication (12).

2. Procédé selon la revendication 1, comprenant en plus la recherche d'informations d'utilisateur en se basant sur l'identifiant d'utilisateur (36) lorsque la concordance avec le modèle vocal (34) est trouvée.

3. Procédé selon la revendication 2, comprenant en plus la fourniture des informations d'utilisateur au réseau de communication (14) pour fournir ainsi un traitement spécialisé en réponse à cela.

4. Procédé selon la revendication 3, les informations d'utilisateur comprenant les commandes pour l'utilisateur du dispositif de communication (12).

5. Procédé selon la revendication 3, les informations d'utilisateur comprenant un profil pour l'utilisateur du dispositif de communication (12).

6. Procédé selon la revendication 1, comprenant en plus la notification au réseau de communication (14) qu'un identifiant d'utilisateur (36) n'est pas disponible lorsque la concordance avec le premier modèle vocal (34) n'est pas trouvée.

7. Système pour identifier un appelant en se basant sur la reconnaissance vocale comprenant :
Un support pouvant être traité par ordinateur;
Des fonctions logiques stockées sur le support pouvant être traité par ordinateur, les fonctions logiques pouvant être utilisées pour recevoir des données d'appel depuis un dispositif de communication (12) par le biais d'un réseau de communication (14), les données d'appel comprenant des données vocales pour un utilisateur du dispositif de communication (12) et un identifiant de poste pour le dispositif de communication (12) ; pour rechercher une concordance avec les données d'identification (32) en se basant sur l'identifiant de poste pour le dispositif de communication (12) ; pour activer un système de reconnaissance vocale (16) lorsqu'une concordance avec les données d'identification (32) est trouvée ; pour rechercher une concordance avec un premier modèle vocal (34) avec le système de reconnaissance vocale (16) en se basant sur les données vocales ; et pour fournir un identifiant d'utilisateur (36) correspondant au premier modèle vocal (34) au réseau de communication (14) lorsque la concordance avec le premier modèle vocal (34) est trouvée, l'identifiant d'utilisateur (36) pouvant être utilisé pour identifier l'utilisateur du dispositif de communication (12) ; et **caractérisé en ce que** si une concordance avec les données d'identification (32) n'est pas trouvée, les fonctions logiques pouvant en plus être utilisées pour rechercher s'il existe une concordance du type d'appel en se basant sur les données de l'appel pour détecter certains types d'appels tels que les appels depuis une cabine publique, un téléphone d'aéroport ou tout autre type d'appel ; pour activer le système de reconnaissance vocale (16) lorsqu'une concordance du type d'appel est trouvée ; pour rechercher une concordance avec les données de comparaison (42) avec le système de reconnaissance vocale (16) en se basant sur une caractéristique commune des données vocales telle que la langue ou l'accent ; pour rechercher une concordance avec un deuxième modèle vocal (54) avec le système de reconnaissance vocale (16) en se basant sur les données de l'appel lorsque la concordance avec les données de comparaison (42) est trouvée ; et pour fournir un identifiant d'utilisateur (56) correspondant au deuxième modèle vocal (54) concordant au réseau de communication (14) lorsque la concordance avec le deuxième modèle vocal (54) est trouvée, l'identifiant d'utilisateur (56) pouvant être utilisé pour identifier l'utilisateur du dispositif de communication (12).

8. Système selon la revendication 7, les fonctions logiques pouvant en plus être utilisées pour rechercher des informations d'utilisateur en se basant sur l'identifiant d'utilisateur (36) lorsque la concordance avec le modèle vocal (34) est trouvée.

9. Système selon la revendication 8, les fonctions logiques pouvant en plus être utilisées pour fournir des informations d'utilisateur au réseau de communication (14).

10. Système selon la revendication 9, les informations d'utilisateur comprenant les commandes pour l'utilisateur du dispositif de communication (12).

11. Système selon la revendication 9, les informations d'utilisateur comprenant un profil pour l'utilisateur du dispositif de communication (12).

12. Système selon la revendication 12, les fonctions logiques pouvant en plus être utilisées; notifier au réseau de communication (14) qu'un identifiant d'utilisateur (36) n'est pas disponible lorsque la concordance avec le premier modèle vocal (34) n'est pas trouvée.
